# EUROPEAN PATENT APPLICATION

(11) **EP 1 251 070 A1**
(43) Date of publication of application: **23.10.2002**
(21) Application number: 01201402.3
(22) Date of filing: 17.04.2001
(51) Int. Cl.: B64G 1/44, H01L 31/045, B64G 1/22

(54) **Panel assembly for space applications arranged to enable synchronizing the deployment of the panels**

(71) Applicant: Fokker Space B.V., 2303 DB Leiden (NL)
(72) Inventor: Zwanenburg, Robert, 2403 XD Alphen aan den Rijn (NL)
(74) Representative: Jorritsma, Ruurd

(57) **Abstract**

A panel assembly (416) for space applications comprises a plurality of panels. The panels are pivotally interconnected, such that the assembly can be in a folded position and a deployed position. The assembly is arranged to enable synchronisation of the movement of the panels. The assembly comprises main panels (420, 450, 430', 440', 420', 450'), and connection elements (460, 470, 460', 470'), wherein the main panels (420, 450, 430', 440', 420', 450') are each pivotally connected to a connection element (460, 470, 460', 470') in each case.

Furthermore, a yoke is provided that has an upper rod (418) and a lower rod (417). The yoke can move the panel assembly (416) from a folded position proximate to the satellite wall (419) towards a deployed position, wherein the assembly (416) extends outwardly from the satellite wall (419).

## Description

The invention relates to a panel assembly for space applications, comprising a plurality of panels, which, for example, are provided with solar cells on at least one surface thereof, wherein the panels are pivotally interconnected, such that the assembly can be in a folded position and a deployed position.

Solar cells generate the power required for the operation of a spacecraft or satellite in orbit. For most spacecraft power loads, the solar cells area needed for sufficient power generation results in a spacecraft configuration that, as a whole, does not fit in a space transportation vehicle, such as a rocket. Therefore, solar panel assemblies are folded into a package during launch and are deployed, for example to a wing-like configuration, after being placed into orbit.

A panel assembly according to the introduction is known from US-6,031,178. This known panel assembly includes a number of rectangular panels each carrying solar cells on one of the two main surfaces, wherein the panels are mutually interconnected by hinges such that the assembly can be brought from a first state, in which the panels are folded into a package, into a second state in which the package is unfolded.

Due to the complexity of the associated structure of this known solar panel assembly, its reliability is not in accordance with the highest reliability required for space applications. Consequently, there is the possibility of failures and breakdowns, for example upon deployment of the solar panel assembly. Especially if the solar panel assembly is extended to include a large number of panels, difficulties may arise.

The object of the present invention is to provide a simple configuration of a panel assembly which can be extended to include many panels and which increases the reliability and motion control thereof.

According to the present invention, this object is achieved in that
- the panel assembly is provided with a first subassembly and a second subassembly, the first and the second subassembly each comprising two comer panels and a connection element,
- wherein the two comer panels of the first subassembly are located adjacent to the two comer panels of the second subassembly, respectively, and wherein adjacent corner panels of the first and second subassembly, respectively, are connected to each other by means of main pivotal connections, and
- wherein the two comer panels of the first subassembly are each connected to the connection element of the first subassembly by means of two auxiliary pivotal connections, respectively, wherein the pivot axis of the pivotal connection between the first comer panel of the first subassembly and the connection element of the first subassembly and the pivot axis of the pivotal connection between the second main panel of the first subassembly and the connection element of the first subassembly are oriented at a first connection angle with respect to each other and are located in one plane, and
- wherein the two corner panels of the second subassembly are each connected to the connection element of the second subassembly by means of two further auxiliary pivotal connections, respectively, wherein the pivot axis of the pivotal connection between the first comer panel of the second subassembly and the connection element of the second subassembly and the pivot axis of the pivotal connection between the second comer panel of the second subassembly and the connection element of the second subassembly are oriented at a second connection angle with respect to each other and are located in one plane.

The panel assembly according to the invention is reliable, even when the assembly has large dimensions and comprises many panels. Motion control during deployment is high, and the risk of failures or other problems is very low. Furthermore, it is possible to synchronise the deployment of the panels of the panel assembly according to the invention.

It is preferred that the connection angles are less than 90°, and that in the fold-up position the pivot axis of the pivotal connection between the comer panels of the first subassembly, and the pivot axis of the pivotal connection between the comer panels of the second subassembly, run parallel to each other. Then, upon deployment, the hinges of the pivotal connections become blocked, so that the panel assembly is still slightly kinked in the ultimate deployed position, which improves the structural stiffness of the wing-like configuration.

The connection angle can also be essentially 90°. The panel assembly can then be folded to the smallest possible package and can be deployed to a fully flat deployed position.

In another embodiment the connection angles are slightly larger than 90°. In this case the hinges of the pivotal connections become blocked as well. The panel assembly is still slightly kinked in the ultimate deployed position, while the pivot axis of the pivotal connection between the corner panels of the first subassembly, and the pivot axis of the pivotal connection between the corner panels of the second subassembly, tend to diverge.

Conveniently, the pivot axes of the main pivotal connections between the first and the second two adjacent corner panels of the first subassembly and the second subassembly, respectively, intersect in an intersection point.

Suitably, one of more additional subassemblies are provided that are pivotally connected to another subassembly. It is possible to extend the panel assembly in every arbitrary direction by connecting further subassemblies.

The invention will now be explained in more detail with reference to the accompanying drawings, wherein:
Figure 1 schematically shows a top view of a first embodiment of a panel assembly according to the invention in the deployed position, for which the connection angles are essentially 90°;
figure 2 is a perspective view of the panel assembly of figure 1 in an intermediate position during folding up;
figure 3 is a side view of the panel assembly of figure 1 after folding up;
figure 4 is a perspective view of a second embodiment of the panel assembly according to the invention in the deployed position, for which the connection angles are less than 90°;
figure 5 schematically shows a top view of a third embodiment of a solar panel assembly according to the present invention in the deployed position for which the connection angles are essentially 90°;
figure 6 is a perspective view of the panel assembly of figure 5 in an intermediate position during folding up;
figure 7 is a side view of the panel assembly of figure 5 after folding up;
figure 8 is a perspective view of a fourth embodiment of the panel assembly according to the invention in the deployed position, for which the connection angles are less than 90°;
figure 9 schematically shows a top view of another embodiment of the panel assembly of the invention in a deployed position;
figure 10 schematically shows a top view of an enlarged embodiment of the panel assembly of the invention in a deployed position;
figure 11 schematically shows a top view of the panel assembly of figure 9, wherein the panel assembly is enlarged by additional panel assemblies;
figure 12 schematically shows a perspective view of another embodiment of a panel assembly according to the invention, wherein the outer panels are inclined with respect to the middle panels. The middle panels may, for example, be covered with solar cells, while the inclining outer panels reflect solar energy to the middle panels;
figure 12a shows a detail of the panel assembly of figure 12;
figure 13 schematically shows a perspective view of a yoke, by which the panel assembly is connected to the body of a satellite, wherein the deployment of the yoke is possible in a combined motion with the deployment of a panel assembly according to the invention.

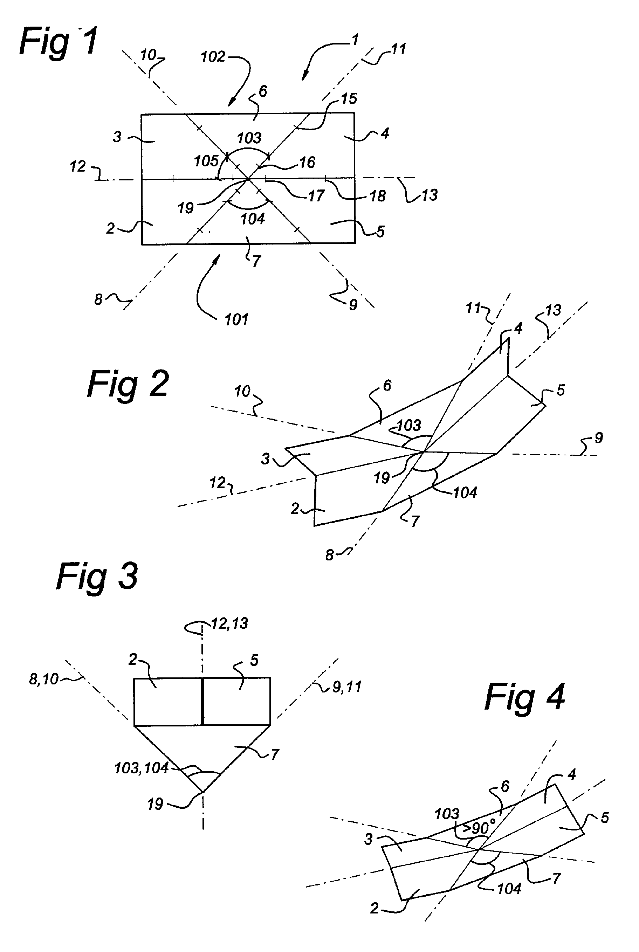

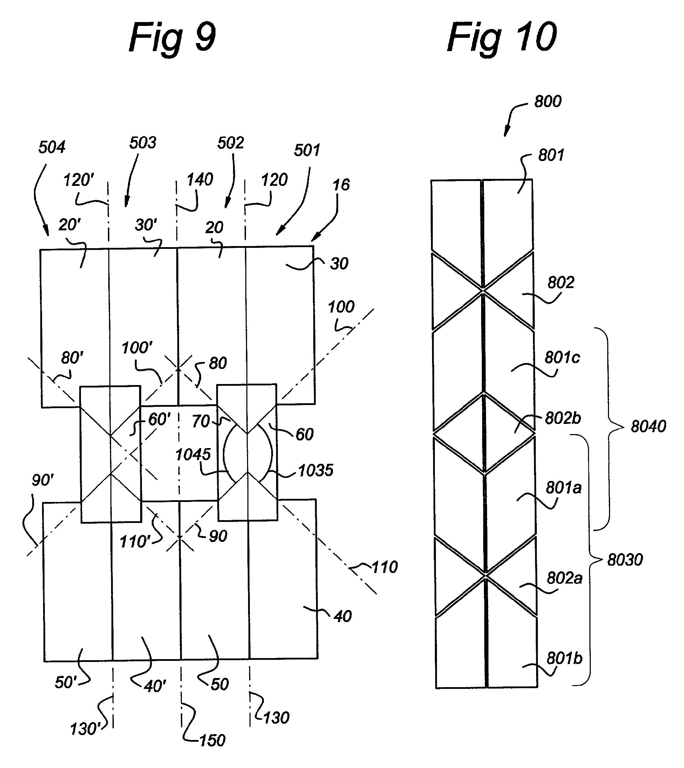

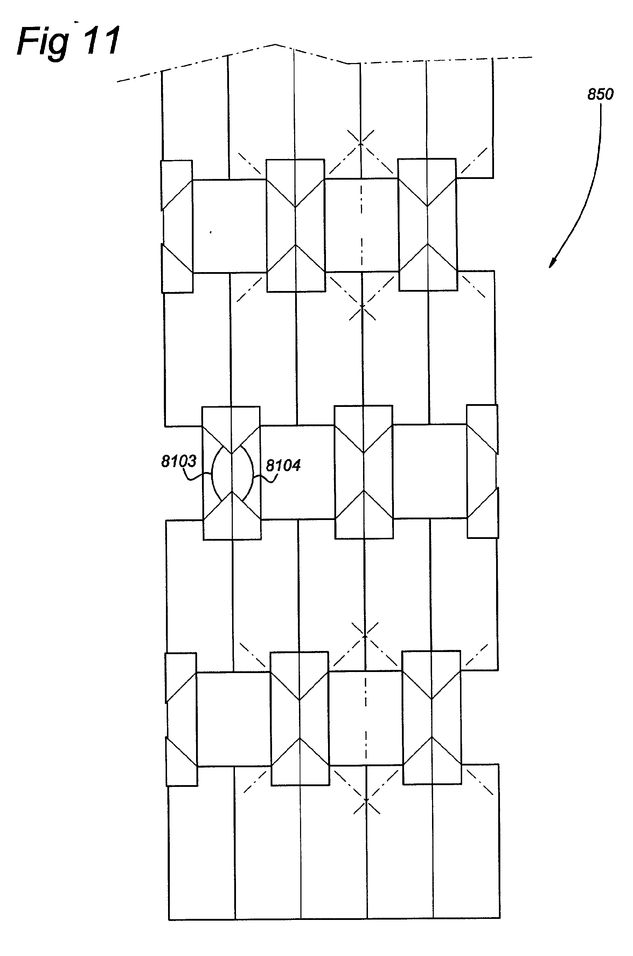

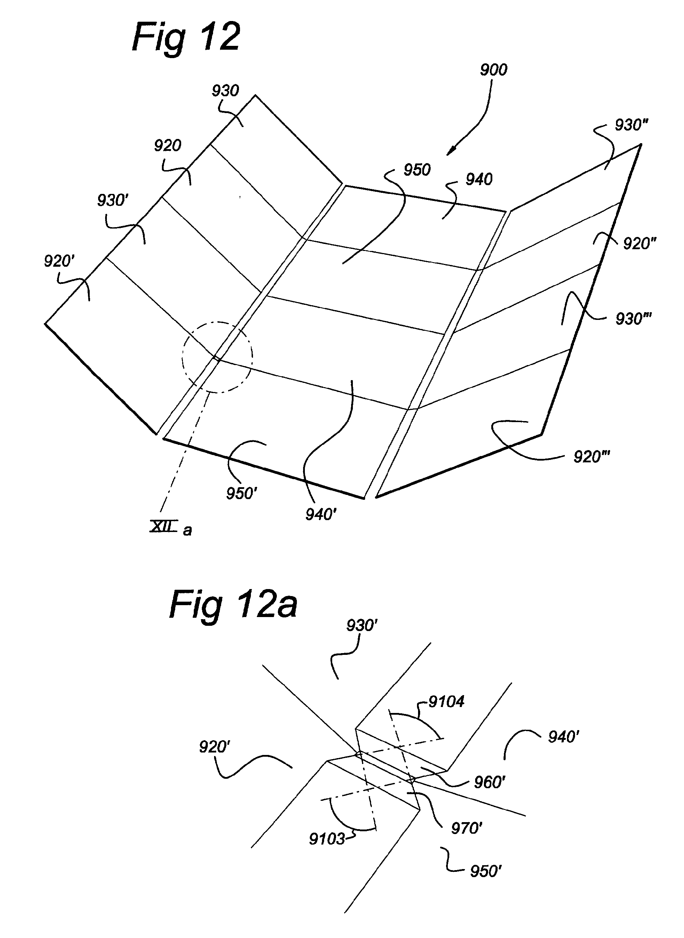

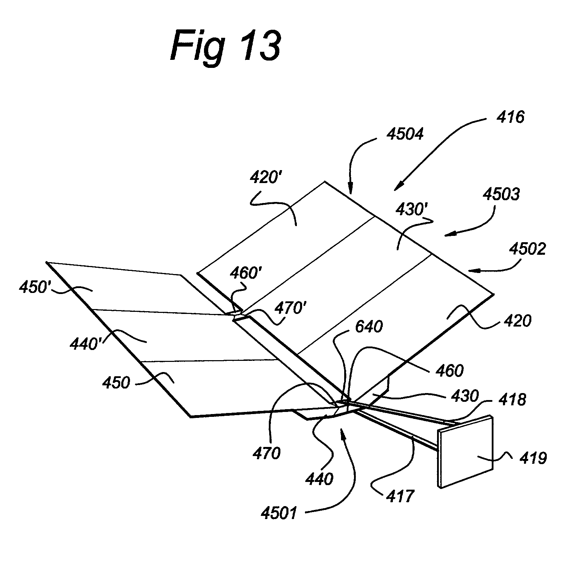

Referring now to figure 1, a solar panel assembly 1 comprises two subassemblies 101 and 102. Each subassembly 101, 102 comprises a triangular connection element 7, 6 and two trapeziform corner panels 2, 5 and 3, 4, respectively. In the embodiment shown in figure 1, the connection element is a panel. However, the connection element can also be a frame or any other kind of structure. The corner panels can be panels on which solar cells are mounted, but, for example, can also be edge members between which a thin sheet of solar cells is spread. Moreover, the corner panels can be small corner portions of much larger solar panels, wherein the corner panels are thus integrally formed with the larger solar panels, as shown, for example, in figures 12 and 13. Alternatively, the corner panels can be separate panels that are attached to larger solar panels (figures 9 and 11).

The corner panels 2 and 3 are interconnected by hinges defining a pivot axis 12, whereas corner panels 4 and 5 are interconnected by hinges defining a pivot axis 13. The connection element 6 is interconnected to both corner panel 3 and corner panel 4 by hinges defining pivot axes 10 and 11, respectively. The connection element 7 is interconnected to corner panel 2 and corner panel 5 by hinges defining pivot axes 8 and 9, respectively.

In figure 1, the pivot axes associated with connection elements 6, 7 are essentially perpendicular to each other. In other words, the connection angle 103 between the pivot axes 10 and 11 is essentially 90°. The connection angle 104, opposite to connection angle 103, between the pivot axes 8 and 9, is essentially equal to connection angle 103. Consequently, the angle 105 between the pivot axis 12 defined by the hinges interconnecting the corner panel 2 of the first subassembly 101 and the corner panel 3 of the subassembly 102 on the one hand, and the pivot axes 8, 10 of these corner panels and an adjacent connection element 6 or 7 on the other hand, is essentially 45°.

For carrying out the folding-up of the panel assembly starting from the ultimate deployed position shown in figure 1, the upper sides of the connection elements 6, 7 move towards each other. At the same time, the lower sides of the corner panels 2, 3 are folded towards each other as well as the lower sides of the corner panels 4, 5. Thus, the intermediate position shown in figure 2 is achieved. Continuing the "zig-zag" folding leads to the fold-up position shown in figure 3, wherein the comer panels 2, 5 as well as the corner panels 3, 4 are adjacent, resulting in the smallest possible package of the panel assembly 1. In order to achieve such a configuration in the fold-up position, the connection angles 103 and 104 between the intersecting pivot axes 8, 9 and between the pivot axes 10, 11, respectively, have to be essentially 90°.

In a preferred embodiment (figure 4), the connection angles 103, 104 are slightly less than 90°. Accordingly, the fully flat deployed position shown in figure 1 cannot be obtained upon deployment. The deployed end position is still folded to a certain extent, because the hinges become blocked upon deployment and maintain the panels in the above-mentioned, kinked deployed end position as shown in figure 4. An advantage of such a kinked deployed end position of the assembly is its increased stiffness compared to that of an assembly with a fully flat deployed position.

In the deployed position of the embodiment shown in figure 1, the pivot axis 8 coincides with pivot axis 11, while pivot axis 9 coincides with pivot axis 10 and pivot axis 12 coincides with pivot axis 13. In the deployed position, pivot axes 8, 9, 10, 11, 12, 13 approximately intersect in one common point 19 in the imaginary case that the panels were infinitely thin. However, due to the thickness of the panels and structural design parameters in practical applications, the pivot axes 8, 9, 10, 11, 12, 13 are slightly offset. In the imaginary case of infinitely thin panels and angles 103 and 104 equal to 90°, the corner panels 2, 5, 3, 4 and connection elements 6, 7 of assembly 1 essentially form a flat plane in the deployed position. In the fold-up position of the assembly 1 shown by figure 3, the pivot axes 12 and 13 coincide, as well as the pivot axes 9 and 11 and pivot axes 8 and 10.

In figure 1, the interstices that separate the planes of the corner panels and connection elements of assembly 1 have been omitted for simplicity. The interstices accommodate line hinges between adjacent planes 2, 3, 4, 5, 6, 7. Although different types of hinges are applicable, it is preferred that piano hinges or strips of a flexible material are used for realizing the hinges which are, for example, joint to the panels by fasteners or adhesive bonding. The hinges may be spring loaded and have an internal blockage to hold the ultimate deployed position of the assembly 1. For the sake of simplicity, figure 1 only depicts hinge sets 15, 16 and hinge sets 17, 18, i.e. hinges defining pivot axes 11, 13 respectively. The hinges are appropriately dimensioned to enable the panels to move from the stowed condition illustrated in figure 3 to the fully deployed condition illustrated in figure 1.

Figure 4 shows the ultimate deployed position when the connection angles are less than 90°. Due to the thickness of the panels, the pivot axes between corner panels and connection elements, and the pivot axes between adjacent corner panels, are offset such that in the fold-up position of the assembly 1, the planes are stacked next to and against each other.

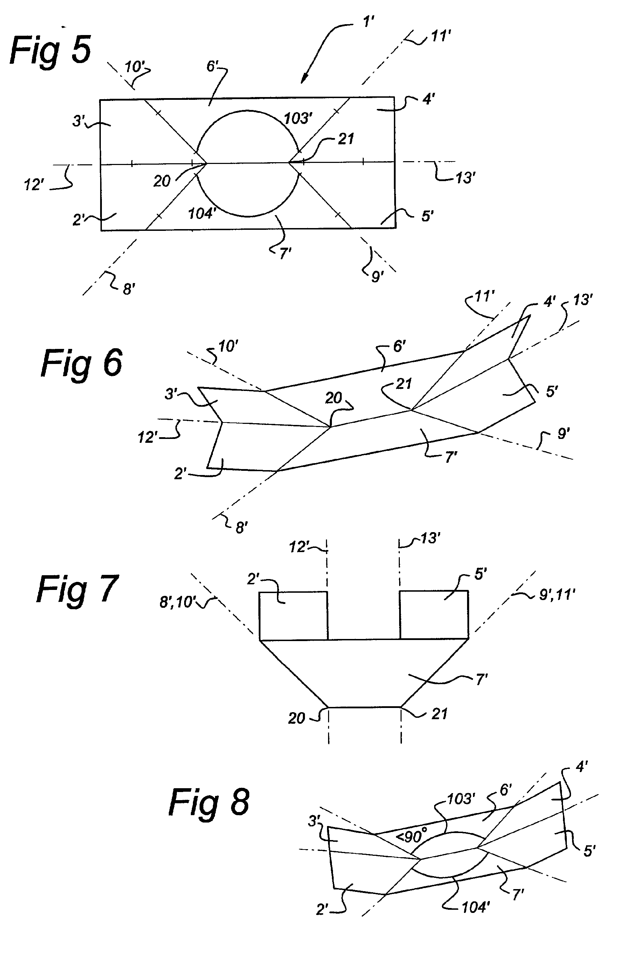

In figure 5, a solar panel assembly 1' is represented comprising four trapezium-shaped corner panels 2', 3', 4', 5' and two triangular connection elements 6' and 7'. Corner panels 2' and 3' are pivotally interconnected defining pivot axis 12', while corner panels 4' and 5' are pivotally interconnected defining pivot axis 13'. Connection element 6' is pivotally connected to corner panels 3' and 4', in which hinges define pivot axes 10', 11' respectively, connection element 7' is pivotally connected to corner panels 2' and 5' defining pivot axes 8', 9' respectively. The connection angle 103' between pivot axes 10', 11' and the connection angle 104' between pivot axes 8', 9' are essentially 90°.

Folding-up of the assembly first leads to the intermediate position shown in figure 6, after which the fold-up position shown in figure 7 is achieved. Consequently, a distance is created between the points of intersection 20 and 21 and between the pivot axes 12' and 13' in the fold-up position of the assembly 1'.

Preferably, the pivot axes 10', 11' meet at a connection angle 103' that is less than 90°. Correspondingly, the connection angle 104' between pivot axes 8', 9' is less than 90° as well. Such an embodiment is shown in figure 8 in its deployed position. In this ultimate deployed position, the panels are slightly kinked.

Figure 9 schematically shows a top view of another embodiment of a solar panel assembly 16 or an array 16. The assembly 16 shown in figure 9 comprises four subassemblies 501, 502, 503, 504. Each subassembly has two solar panels each rigidly connected to two corner panels, respectively, as well as a connection element that extends between and is connected to these two corner panels. In the array 16 shown in figure 9, adjacent solar panels of adjacent subassemblies are pivotally interconnected along pivot axes 120, 130, 140, 150, 120', 130'. The pivot axes 120, 130, 140, 150, 120', 130' are approximately parallel to each other in the deployed position of the assembly 16.

Considering subassemblies 501 and 502, the connection angle 1035 between the pivot axis 100 defined by the pivotal connection between the corner panel of the solar panel 30 and connection element 60 on the one hand, and the pivot axis 110 formed by the corner panel of the solar panel 40 and the same connection element 60 on the other hand, is essentially 90°.

As already discussed in the description of the first embodiment of the invention shown in figure 1-3, the connection angle 1035 is preferably less than 90° depending on the application of the invention. A connection angle 1035 that is less than 90° results in structural advantages, especially in view of stiffness in the deployed position of the assembly, as explained above. An angle 1045 is located opposite to angle 1035, due to symmetry of subassemblies 501 and 502 with respect to the plane defined by pivot axes 120 and 130.

Consequently, the pivot axis 100 defined by the pivot connection between connection element 60 and the corner panel of solar panel 30 is oriented at an acute angle with respect to the pivot axis 120 of the pivot connection between the solar panel 30 and the adjacent solar panel 20 of the adjacent subassembly 502. In the embodiment shown in figure 9, the acute angle is 45°, which enables the assembly 16 of connection elements and solar panels including their comer panels to be folded up with the panels against each other.

Similarly, the pivot axis 110 runs at an acute angle, substantially 45°, with respect to pivot axis 130. Moreover, pivot axes 80, 90, 100', 110', 80', 90' are construed such that they are oriented at acute angles of essentially 45° with respect to pivot axes 120, 130, 120', 130', 120', 130' respectively.

In the embodiment shown in figure 9, the subassemblies 502 and 503 are pivotally interconnected only along their solar panels 20, 50 and 30', 40' respectively. Each corner panel of the solar panels of the array 16 is interconnected with not more than one connection element.

In the fold-up position of the assembly 16, depending on the angles 103, 104 being approximately 90° or less than 90°, the pivot axes 120, 140 and 120' may approximately coincide, as well as the pivot axes 130, 150, 130', the pivot axes 80, 90, 100, 110 and the pivot axes 80', 90', 100' and 110'.

The array 16 can be extended with other subassemblies, which can be connected lengthwise (to the right and left in figure 9) to solar panels 30, 40 of subassembly 501 or solar panels 20', 50' of subassembly 504 (not shown). Besides, it is possible to connect additional panels, elements or subassemblies to solar panels of the assembly 16 in the lateral (upwards and downwards in figure 9) direction.

Another example of an extended solar panel subassembly 800 of the present invention is shown in figure 10. In correspondence with the above embodiments, the multi solar panel assembly 800 consists of several subassemblies pivotally connected to each other, comprising corner panels 801, 801a, 801b, 801c as well as connection elements 802, 802a, 802b. However, in the solar panel assembly 800, two subassemblies share a common corner panel. For example, the corner panel designated 801a belongs to both subassembly 8030, further comprising connection elements 802a and 801b, and subassembly 8040, further comprising connection element 802b and corner panel 801c. Thus, the subassembly is extended.

Again, the solar panel assembly 800 can be folded to a package starting from the deployed condition. The pivot axes of the pivotal connections between corner panels and in each case one connection element are oriented at an angle of essentially 90°. In the imaginary case that the angles were exactly 90°, the solar panel assembly would be fully flat in its deployed position. In practice, a small deviation from 90° will always exist. Depending on the application, this deviation can be designed on purpose in order to obtain a deployed position of the solar panel assembly that is slightly kinked, wherein the hinges are blocked. Such a slightly kinked deployed position has structural advantages, e.g. improved stiffness.

A further embodiment of an extended multi panel assembly 850 of the present invention is given by figure 11. This embodiment is an enlarged panel assembly of figure 9. The panel assembly 850 comprises a plurality of subassemblies. The panels of the subassemblies are connected such that the connection elements of the subassemblies are staggered relative to each other. The subassemblies have common corner panels. Again, the solar panel assembly 850 can be folded to a package starting from the fully deployed condition shown in figure 11. When the equal angles 8103, 8104 between the pivot axes of the pivotal connections between solar panels and in each case one connection element, are 90°, the panel assembly would be fully flat in its deployed position. In practice, it is preferred, in order to overcome variations in dimensions and tolerances in manufactured components, that the angles 8103, 8104 are smaller than 90°. Besides, because these angles are less than 90°, the panel assembly in its deployed position has a kinked shape, wherein the hinges are blocked. Such a slightly kinked configuration has structural advantages, e.g. improved stiffness.

Another embodiment is schematically shown in figure 12. The multi panel assembly 900 consists of a plurality of solar panels interconnected using subassemblies that comprise corner panels and connection elements. The middle solar panels 940, 950, 940' 950' are coupled to both solar panels 930, 920, 930' 920' and solar panels 930", 920", 930"', 920"', by means of corner panels and connection elements as shown in figure 12a.

If the equal angles 9103, 9104 are 90°, the fully deployed assembly is flat. However, when the folded package is flat and these angles are less than 90°, the fully deployed position has a kinked shape. In a variant the angles 9103, 9104 are much smaller than 90°, with the effect that both the outer panels 930, 920, 930', 920', as well as 930", 920", 930"', 920"', and the middle panels 940, 950, 940', 950' make a considerable angle with respect to each other. An object of such inclined outer panels of the solar array of a satellite, for example an inclination angle of 60°, can be to use the surface of both outer panels as reflecting areas to concentrate incoming solar energy at the middle panel.

For deployment of the panel assembly according to the invention, a deployment yoke can be provided on the satellite sidewall (figure 13). Such a yoke can move the array from a stowed position proximate to the satellite sidewall towards a deployed position, wherein the array extends outwardly from the sidewall. The yoke is, for example, constructed as a system of four pivotally interconnected rigid rods. Figure 13 schematically shows a perspective view of a fully deployed panel assembly 416 or an array 416. The assembly 416 comprises four subassemblies 4501, 4502, 4503, 4504. Each subassembly has two solar panels 430, 440; 420, 450; 430', 440'; 420', 450' each including a comer panel, wherein for example the solar panels 430, 440 of subassembly 4501 are corner panels only, while connection elements 460, 470, 460', 470' extend between and are connected to two corner panels in each case. In the array 416, adjacent solar panels of adjacent subassemblies are pivotally interconnected along pivot axes. Considering subassemblies 4501, 4502 and 4503, 4504, the angle between the pivot axes of the connection elements is preferably less than 90°, resulting in a kinked shape of the assembly 416 when deployed.

One end of a lower first rod 417 of the yoke is rigidly fixed to connection element 470 between corner panels 430, 440 of the subassembly 4501, whereas its other end is pivotally connected to a satellite wall 419. One end of the upper second rod 418 is pivotally connected to edge 640 of connection element 460 between the corner parts of the solar panels 420, 450 of the subassembly 4502. Its other end is pivotally connected to the satellite. A driving mechanism can be provided to enable the yoke to deploy the assembly, in addition to the effect of the pre-stressed spring hinges between the panels of the assembly. It is also possible that deployment is performed by pre-stressed springs only, while the yoke serves as a connection between satellite and panel array.

The description above refers to embodiments of the present invention. It will be understood that many modifications can be made without departing from the scope of the present invention. The present description of the embodiments is purely illustrative and by no means restrictive.

## Claims

1. Panel assembly for space applications, comprising a plurality of panels, wherein the panels are pivotally interconnected, such that the assembly can be in a folded position and a deployed position, which assembly is arranged to enable synchronization of the movement of the panels, **characterised in that**
- the panel assembly (1) is provided with a first subassembly (101) and a second subassembly (102), the first and the second subassembly (101, 102) each comprising two comer panels (2, 5; 3, 4) and a connection element (7, 6),
- wherein the two corner panels (2, 5) of the first subassembly (101) are located adjacent to the two corner panels (3, 4) of the second subassembly (102), respectively, and wherein adjacent corner panels (2, 3; 4, 5) of the first and second subassembly, respectively, are connected to each other by means of main pivotal connections, and
- wherein the two corner panels (2, 5) of the first subassembly (101) are each connected to the connection element (7) of the first subassembly (101) by means of two auxiliary pivotal connections, respectively, wherein the pivot axis (8) of the pivotal connection between the first comer panel (2) of the first subassembly (101) and the connection element (7) of the first subassembly (101) and the pivot axis (9) of the pivotal connection between the second corner panel (5) of the first subassembly (101) and the connection element (7) of the first subassembly (101) are oriented at a first connection angle (104) with respect to each other and are located in one plane, and
- wherein the two corner panels (3, 4) of the second subassembly (102) are each connected to the connection element (6) of the second subassembly (102) by means of two further auxiliary pivotal connections, respectively, wherein the pivot axis (10) of the pivotal connection between the first comer panel (3) of the second subassembly (102) and the connection element (6) of the second subassembly (102) and the pivot axis (11) of the pivotal connection between the second corner panel (4) of the second subassembly (102) and the connection element (6) of the second subassembly (102) are oriented at a second connection angle (103) with respect to each other and are located in one plane.

2. Panel assembly according to claim 1, **characterised in that** the connection angles are less than 90°.

3. Panel assembly according to claim 1, **characterised in that** the connection angles are essentially 90°.

4. Panel assembly according to claim 1, **characterised in that** the connection angles are greater than 90°.

5. Panel assembly according to one of the preceding claims, **characterised in that** the first connection angle (104) and the second connection angle (103) are equal.

6. Panel assembly according to one of the preceding claims, **characterised in that** a connection element has the shape of a trapezium.

7. Panel assembly according to one of the preceding claims, **characterised in that** a connection element has the shape of a triangle.

8. Panel assembly according to one of the preceding claims, **characterised in that** a connection element is a panel.

9. Panel assembly according to one of the preceding claims, **characterised in that** a corner panel has the shape of a triangle.

10. Panel assembly according to one of the preceding claims, **characterised in that** a corner panel has the shape of a parallelogram.

11. Panel assembly according to one of the preceding claims, **characterised in that** one or more additional subassemblies are provided that are pivotally connected to another subassembly.

12. Panel assembly according to one of the preceding claims, **characterised in that** the panel assembly (416) is connected to a satellite body (419) by a pivotal connection between a connection element (470) of a first assembly (4501) and the satellite body (419) and a pivotal connection between a connection element (460) of a second subassembly (4502) and the satellite body (419).
